# FASCICULE DE BREVET EUROPEEN

(11) **EP 3 233 444 B1**
(45) Date de publication et mention de la délivrance du brevet: **31.07.2019**
(21) Numéro de dépôt: 15720945.3
(22) Date de dépôt: 29.04.2015
(51) Int. Cl.: B29C 70/86, B29D 24/00, B32B 29/02, B29C 70/08, B32B 37/14, B32B 3/12, B31D 3/02, B32B 38/06

(54) **PROCÉDÉ DE FABRICATION D'UNE PIÈCE COMPOSITE AVEC IMPRESSIONS EN RELIEF ET PIÈCE COMPOSITE ISSUE D'UN TEL PROCÉDÉ**
VERFAHREN ZUR HERSTELLUNG EINER VERBUNDKOMPONENTE MIT PRÄGUNGEN IM RELIEF UND AUS SOLCH EINEM VERFAHREN STAMMENDE VERBUNDKOMPONENTE
METHOD FOR MANUFACTURING A COMPOSITE COMPONENT WITH IMPRESSIONS IN RELIEF AND COMPOSITE COMPONENT DERIVED FROM SUCH A METHOD

(30) Priorité: 19.12.2014 FR 1462892
(43) Date de publication de la demande: 25.10.2017
(73) Titulaire: Faurecia Automotive Industrie, 92000 Nanterre (FR); Lineo NV, 8760 Meulebeke (BE); PSA Automobiles SA, 78300 Poissy (FR); Université De Reims Champagne-Ardenne, 51097 Reims Cedex (FR)
(72) Inventeur: JEUNESSE, Steve, F-08210 Mouzon (FR); MARCEL, Valérie, F-55150 Brandeville (FR); ABBES, Boussad, F-51360 Beaumont-sur-vesle (FR); VANFLETEREN, François, F-27300 Bernay (FR); ROUSSEAU, Frédéric, F-91410 Dourdan (FR)
(74) Mandataire: Lavoix
(86) Numéro de dépôt international: PCT/EP2015/059418
(87) Numéro de publication internationale: WO 2016/096163

(56) Documents cités:
- EP-A1- 0 649 736
- WO-A2-2004/106044
- WO-A2-2007/101868
- DE-B3-102012 022 713
- US-A- 3 879 245

## Description

La présente invention concerne un procédé de fabrication d'une pièce composite structurelle, notamment pour véhicule automobile, ainsi que la pièce composite structurelle en résultant.

Plus particulièrement, l'invention concerne un procédé de fabrication d'une pièce composite structurelle, comprenant les étapes suivantes : une étape d'empilement, dans un premier moule chauffant, d'un premier mat, d'un écarteur et d'un second mat ; l'écarteur étant disposé entre le premier et le second mat ; au moins l'un des premier et second mats comportant un voile continu de fibres imprégné par une composition comportant une résine thermodurcissable ; et une étape de compression et de chauffage de l'empilement par le premier moule chauffant, le chauffage étant réalisé à une température et pendant une durée permettant une polymérisation ou réticulation de la résine thermodurcissable.

Un tel procédé, décrit par exemple dans le document WO2012/056202, ainsi que dans les documents WO 2007/101868 A1 et US 3879245, permet d'obtenir, en une seule étape de moulage ou thermoformage, un panneau formé de deux mats, ou peaux composites, séparées par un écarteur. La résine présente dans les peaux assure également la solidarisation des peaux avec l'écarteur.

L'écarteur est en général en carton, sous forme d'une structure en nid d'abeilles. Une pression excessive lors de l'étape de compression provoquerait son écrasement, rendant le panneau inutilisable. C'est ce qui se produit lorsque les peaux sont constituées par des mats de fibres enchevêtrées produites par cardage-nappage-aiguilletage tel que décrit dans WO2012/056202.

Pour pallier ce problème, il est connu de remplacer le type de mats décrits dans WO2012/056202 par une superposition de voiles comprenant une pluralité de fibres parallèles, ou voiles unidirectionnels, possédant une densité plus élevée que des nappes issues de cardage-nappage. Un procédé pour l'obtention de tels voiles est décrit par exemple dans WO2013/068355.

Cette densité élevée des voiles permet d'obtenir une densité optimale des peaux pour réaliser un panneau composite, sans pression excessive lors de l'étape de compression. En effet le mat constitué par la superposition des voiles avant thermoformage possède déjà pratiquement la densité requise pour le composite.

Cependant, il arrive que les pièces composites structurelles doivent être réalisées de manière à présenter des formes spécifiques, notamment au niveau de leurs bords. Il s'agit par exemple de contours de forme précise, ou encore de reliefs ou cavités, telles que des dépressions permettant l'inclusion de poignées ou d'anneaux de fixation.

Dans un tel cas, un procédé tel que décrit ci-dessus met en oeuvre, pour l'étape de compression et de chauffage, un moule reproduisant les formes spécifiques de la pièce. Toutefois, la pression élevée peut conduire à un écrasement aléatoire de l'écarteur aux endroits des reliefs ou cavités, conduisant à une pièce de forme mal définie.

Ce problème est notamment exacerbé lorsque l'écarteur présente une épaisseur élevée, par exemple supérieure à 15 mm.

Un procédé alternatif, décrit par exemple dans EP0628406, consiste à imprégner l'écarteur avec une résine expansible de type polyuréthane, en déposant plus de résine sur les endroits où se trouveront les reliefs ou cavités, c'est-à-dire principalement sur les bords. Les deux mats sont ensuite placés de part et d'autre de l'écarteur puis le tout est déposé dans un moule de thermoformage. La résine s'expanse et remplit les alvéoles de l'écarteur, principalement aux endroits où elle se trouve en plus grande quantité. L'écarteur ainsi durci peut être formé sans s'écraser de façon aléatoire. La résine assure également la fonction de collage des mats sur l'écarteur. Un inconvénient de ce procédé est cependant lié au coût élevé de la résine expansible.

La présente invention a pour but de fournir un procédé simple et peu coûteux de fabrication d'une pièce composite structurelle présentant des formes spécifiques.

A cet effet, l'invention a pour objet un procédé de fabrication du type précité, comportant, avant l'étape d'empilement dans le premier moule chauffant, une étape de compression de l'écarteur dans un deuxième moule non chauffant, une première surface interne dudit deuxième moule non chauffant comportant au moins une première empreinte en relief et/ou en creux, ladite première surface interne étant sensiblement orientée dans une direction de compression, de sorte à conformer l'écarteur selon ladite empreinte. Par ailleurs, une deuxième surface interne du premier moule chauffant comporte au moins une deuxième empreinte en relief et/ou en creux correspondant à la première empreinte de la première surface interne du deuxième moule non chauffant, ladite deuxième surface interne étant sensiblement orientée dans la direction de compression, de sorte que, durant l'étape de compression et de chauffage par le premier moule, un entrefer entre l'écarteur et ladite deuxième surface interne soit sensiblement constant sur ladite deuxième surface interne.

Suivant d'autres aspects avantageux de l'invention, le procédé comporte l'une ou plusieurs des caractéristiques suivantes, prises isolément ou suivant toutes les combinaisons techniques possibles :
- le procédé comprend, avant l'étape d'empilement dans le premier moule chauffant, une étape de découpage de l'écarteur, de sorte à définir des dimensions dudit écarteur perpendiculairement à la direction de compression ;
- durant l'étape de compression et de chauffage par le premier moule chauffant, une première zone du premier mat est au contact d'une seconde zone du second mat ;
- le procédé comprend, entre l'étape de compression de l'écarteur dans le deuxième moule non chauffant et l'étape d'empilement dans le premier moule chauffant, une étape d'enduction de l'écarteur par une colle, ladite colle étant de préférence à base aqueuse ;
- la résine thermodurcissable génère de l'eau au cours de sa polymérisation ou réticulation ; et le premier moule chauffant comporte des moyens d'évacuation de vapeur d'eau formée lors de l'étape de compression et de chauffage ;
- le voile continu de fibres comprend une pluralité de fibres parallèles liées entre elles par la composition comportant une résine thermodurcissable ;
- l'étape d'empilement du premier et/ou du second mats comprend l'empilement dans le premier moule chauffant d'une pluralité de voiles continus.

L'invention se rapporte en outre à une pièce composite structurelle conformément à l'objet de la revendication 9.

L'invention sera mieux comprise à la lecture de la description qui va suivre, donnée uniquement à titre d'exemple non limitatif et faite en se référant aux dessins sur lesquels :
- la figure 1 est une vue en coupe d'une pièce composite structurelle selon un mode de réalisation de l'invention ;
- la figure 2 est une vue en coupe d'un premier dispositif de fabrication de la pièce composite de la figure 1, durant une première étape d'un procédé de fabrication selon un mode de réalisation de l'invention ;
- la figure 3 est une vue en coupe d'un deuxième dispositif de fabrication de la pièce composite de la figure 1, durant une deuxième étape d'un procédé de fabrication selon un mode de réalisation de l'invention ;
- la figure 4 est une vue partielle, en coupe, du dispositif de la figure 3, durant une troisième étape dudit procédé de fabrication.

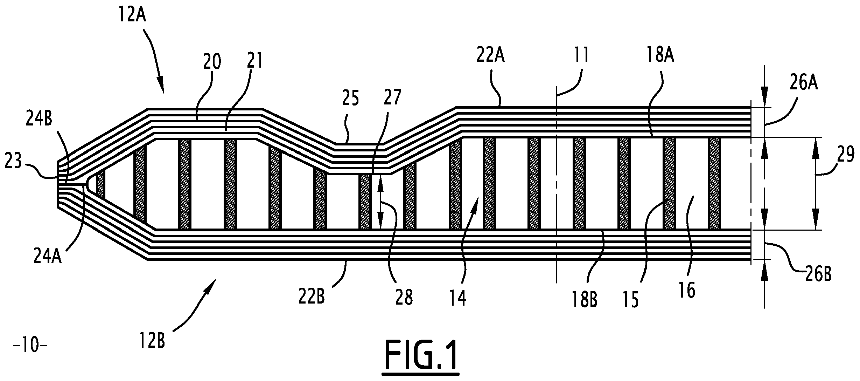

La figure 1 est une vue partielle, en coupe, d'une pièce composite structurelle 10 de véhicule automobile. La pièce 10 est une pièce structurante du véhicule automobile, par exemple un panneau, tel qu'une tablette arrière de masquage de coffre, un faux plancher d'habitacle ou de coffre, ou un sous-moteur.

On considère un axe 11, sensiblement perpendiculaire à un plan moyen de la pièce structurelle 10.

La pièce composite structurelle 10 comporte un premier 12A et un second 12B mat, et un écarteur 14, interposé entre les deux mats 12A, 12B.

L'écarteur 14 est de préférence formé d'un matériau léger, tel que du papier ou du carton. Avantageusement, l'écarteur 14 est réalisé à base d'une structure alvéolaire ou en nid d'abeille. Ainsi, l'écarteur 14 présente une pluralité de parois 15 sensiblement parallèles à l'axe 11. Les parois 15 délimitent des espaces centraux 16 de contour fermé, par exemple de forme polygonale, formant les alvéoles.

L'écarteur 14 comporte des faces 18A, 18B opposées, formées par les extrémités des parois 15 selon l'axe 11. Les faces 18A, 18B présentent ainsi une surface discontinue. Chaque mat 12A, 12B est fixé sur une face 18A, 18B.

La masse surfacique de l'écarteur 14 est de préférence faible, notamment inférieure à 1500 g/m² et plus préférentiellement comprise entre 400 g/m² et 1200 g/m².

Au moins l'un des premier 12A et second 12B mats comporte au moins un voile continu 20 de fibres, imprégné par une résine thermodurcissable 21.

Dans l'exemple représenté à la figure 1, chacun des premier 12A et second 12B mats comporte une pluralité de voiles 20, ces voiles 20 étant empilés les uns sur les autres. Par exemple, chacun des mats 12A, 12B comporte entre trois et huit voiles empilés. Dans ce cas, les voiles 20 sont préférentiellement de faible épaisseur et dénommés « voiles élémentaires ».

Selon la fonction de destination de la pièce structurelle 10, les premier 12A et second 12B mats comportent le même nombre de voiles 20 empilés, ou en variante des nombres différents de voiles 20 empilés.

En variante à l'exemple de la figure 1, le premier 12A et/ou le second 12B mats comportent un unique voile 20.

Dans le cas de voiles empilés, les fibres d'un voile 20 sont avantageusement disposées parallèlement les unes aux autres selon une direction longitudinale. Un tel voile 20 est dit « voile unidirectionnel » ou « nappe unidirectionnelle ». De tels voiles sont notamment décrits dans le document WO2013/068355.

Dans le cas d'un mat 12A, 12B comprenant plusieurs voiles 20 unidirectionnels empilés, les fibres parallèles de chaque voile 20 sont avantageusement disposées de manière à former un angle non nul, notamment un angle droit, avec les fibres parallèles de chaque autre voile adjacent. Une telle disposition permet de renforcer le mat 12A, 12B correspondant, en fonction de l'orientation des contraintes de la pièce finie en situation.

En variante, les fibres du voile 20 sont orientées de manière aléatoire.

Avantageusement, au moins certaines des fibres du voile 20 sont des fibres longues, c'est-à-dire présentent une longueur supérieure à 20 centimètres, plus préférentiellement supérieure à 50 centimètres. La longueur des fibres longues est par exemple comprise entre 50 et 80 centimètres. Les fibres longues confèrent au voile 20 des propriétés intéressantes de résistance mécanique, comme décrit par exemple dans le document WO2013/068355.

Selon un premier mode de réalisation préférentiel, au moins certaines des fibres du voile 20 sont des fibres naturelles. Dans un mode de réalisation, toutes les fibres du voile 20 sont constituées de fibres longues naturelles. En variante, une partie des fibres du voile 20 est formée par des fibres artificielles ou synthétiques, distinctes des fibres longues naturelles, ou par un mélange de ces fibres.

Les fibres longues naturelles sont avantageusement des fibres extraites de végétaux, notamment des fibres de lin. En variante, les fibres longues naturelles sont des fibres de sisal, de jute, de chanvre, de kénaf. Des fibres artificielles sont par exemple choisies parmi les fibres de cellulose régénérée, comme la viscose.

Les fibres synthétiques sont par exemple des fibres polyoléfines, notamment choisies parmi les fibres de polyéthylène, de polypropylène, de polyester, de polyamide, de polyimide, et leurs mélanges. En variante, les fibres synthétiques sont des fibres bi-composantes formées d'un polymère et d'un copolymère, le polymère et son copolymère ayant des points de fusion différents.

Préférentiellement, les fibres synthétiques sont à base de polymères thermoplastiques, ce qui permet, lors d'une étape de thermoformage à la température de fusion du polymère, de réaliser un liage des fibres naturelles.

Avantageusement, la proportion massique de fibres longues d'origine naturelle du voile 20 est supérieure à 50% de la masse totale des fibres du voile 20.

Selon un deuxième mode de réalisation préférentiel, au moins certaines des fibres du voile 20 sont des fibres ou des filaments de verre. Dans un mode de réalisation, toutes les fibres du voile 20 sont constituées de filaments de verre. En variante, une partie des fibres du voile 20 est formé par d'autres types de fibres.

Préférentiellement, le voile 20 comprenant des filaments de verre est réalisé par extrusion/nappage, ce qui lui confère une densité élevée, appropriée à la réalisation de l'invention. Un mat de verre à filaments continus, propre à la mise en oeuvre de ce deuxième mode de réalisation, est notamment commercialisé sous la dénomination Unifilo® par la société Chomarat.

Selon un troisième mode de réalisation préférentiel, le mat est formé par l'association ou le mélange de fibres ou filaments d'une part (fibres naturelles, fibres ou filaments de verre, de carbone..), et d'un matériau thermofusible d'autre part. Une telle association est par exemple décrite dans FR2899146.

D'une manière générale, un mat 12A, 12B approprié à la réalisation de l'invention présente avantageusement une porosité faible, c'est-à-dire une densité élevée. La densité est préférentiellement comprise entre 0,8 et 1,2. Dans la fourchette des poids souhaités, une telle densité se traduit par une épaisseur inférieure à 1 mm, préférentiellement comprise entre 0,5 et 0,8 mm.

Au contraire, les nappes issues de cardage-nappage telles que décrites dans WO2012/056202 présentent une porosité importante. L'utilisation de tels produits n'est donc pas souhaitable dans le cadre de l'invention.

La résine 21 est préférentiellement une résine à base aqueuse, plus préférentiellement une résine acrylique. Ce type de résine présente un grand intérêt en association avec des fibres naturelles car son affinité avec ce type de fibres est excellente, pour un coût et un impact environnemental modérés. Un exemple de résine acrylique utilisable est commercialisé par BASF sous la dénomination Acrodur®.

Chacun des premier et second mats 12A,12B présente une surface externe 22A, 22B s'étendant principalement selon un plan perpendiculaire à l'axe 11. Les surfaces externes 22A, 22B se rejoignent au niveau d'un bord 23 de la pièce 10.

Dans l'exemple représenté à la figure 1, une partie périphérique 24A du premier mat 12A est au contact d'une partie périphérique 24B du second mat 12B. Les parties périphériques 24A, 24B sont adjacentes au bord 23.

Plus précisément, au niveau des parties périphériques 24A, 24B, les mats 12A,12B ne sont pas disposés de part et d'autre de l'écarteur 14.

De préférence, chacune des parties périphériques 24A, 24B est refermée sur elle-même sur un contour externe de la pièce 10. L'écarteur est ainsi complètement enfermé entre les mats 12A,12B et n'affleure pas les bords de la pièce 10, pour une meilleure étanchéité de la pièce.

Par ailleurs, la surface externe 22A du premier mat 12A comporte au moins une empreinte 25 en creux, formant une dépression par rapport au plan principal de ladite surface 22A. L'empreinte 25 est par exemple destinée à recevoir une poignée ou un anneau de fixation (non représentés), permettant de manipuler ou déplacer la pièce 10. En variante, la surface externe 22B du second mat 12B comporte également au moins une empreinte.

De préférence, une épaisseur 26A, 26B de chaque mat 12A, 12B, selon l'axe 11, est sensiblement constante sur l'ensemble de la pièce 10. Par «sensiblement constante », on entend par exemple que l'épaisseur 26A, 26B est comprise entre 95% et 105% d'une valeur moyenne.

En revanche, une épaisseur de l'écarteur 14 selon l'axe 11 est variable sur l'ensemble de la pièce 10. L'écarteur 14 comporte notamment une empreinte 27 en creux, correspondant à l'empreinte 25 de la surface externe 22A. Au niveau de l'empreinte 27, une épaisseur 28 de l'écarteur 14 est notamment inférieure à une épaisseur maximale 29 dudit écarteur.

De même, à proximité des parties périphériques 24A, 24B des mats 12A,12B, l'épaisseur de l'écarteur 14 est préférentiellement inférieure à la valeur maximale 29. En d'autres termes, l'écarteur 14 a préférentiellement des bords affinés.

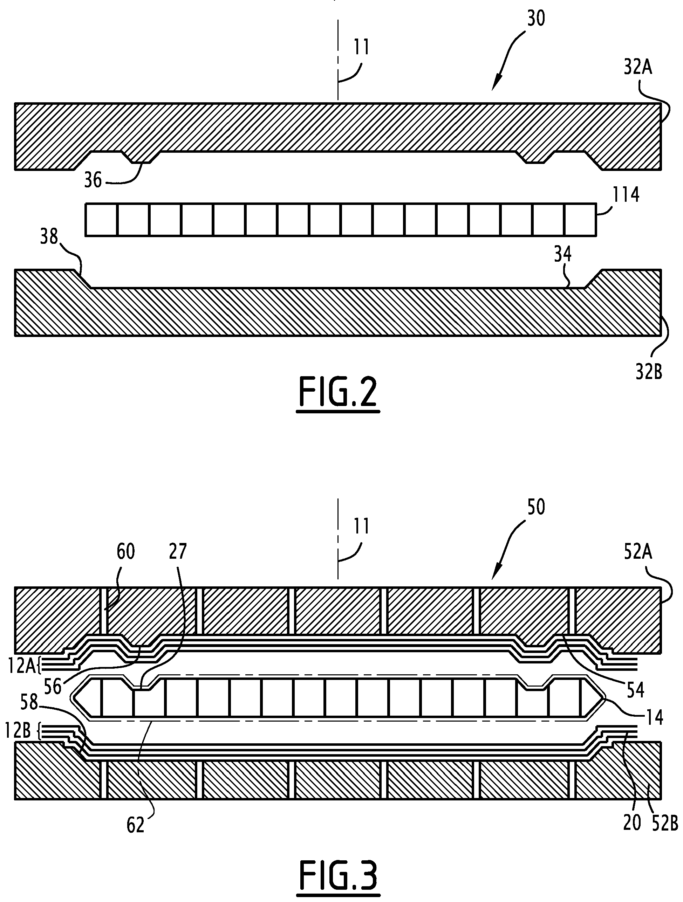

La figure 2 représente un dispositif 30 de mise en oeuvre d'une première étape de fabrication de la pièce composite 10 selon un mode de réalisation de l'invention. Le dispositif 30 est un premier moule, ou conformateur, comportant une première partie 32A et une seconde partie 32B.

Les première et seconde parties 32A, 32B forment une première surface interne 34, complémentaire de la forme souhaitée de l'écarteur 14 de la pièce 10. En particulier, au niveau de la première partie 32A, la première surface interne 34 comporte au moins une empreinte 36 en relief, correspondant à l'empreinte 27 en creux de l'écarteur 14 de la pièce 10. De même, les bords 38 de la première surface interne 34 ont préférentiellement une forme inclinée par rapport à l'axe 11, de manière à affiner les bords de l'écarteur 14.

De préférence, une extrémité des bords 38 comprend des arêtes tranchantes (non représentées), de manière à découper l'écarteur 14 sur son pourtour afin de définir ses dimensions, perpendiculairement à l'axe 11, en fonction des dimensions souhaitées pour la pièce 10.

Le dispositif 30 comporte des moyens (non représentés) de compression l'une contre l'autre des parties 32A, 32B, selon l'axe 11. En revanche, le dispositif 30 n'est pas équipé de moyens de chauffage.

La figure 3 représente un dispositif 50 de mise en oeuvre d'une deuxième étape de fabrication de la pièce composite 10 selon un mode de réalisation de l'invention. Le dispositif 50, en l'espèce un deuxième moule, comporte une première partie 52A et une seconde partie 52B.

Les première et seconde parties 52A, 52B forment une deuxième surface interne 54, complémentaire de la forme souhaitée des surfaces externes 22A, 22B de la pièce 10. En particulier, au niveau de la première partie 52A, la deuxième surface interne 54 comporte au moins une empreinte 56 en relief, correspondant à l'empreinte 25 en creux de la surface externe 22A de la pièce 10. De même, les bords 58 de la deuxième surface interne 54 ont une forme complémentaire de celle des parties périphériques 24A, 24B et du bord 23 de la pièce 10.

Le dispositif 50 est un moule chauffant et comporte des moyens (non représentés) de chauffage et de compression l'une contre l'autre des parties 52A, 52B, selon l'axe 11.

De manière préférentielle, le dispositif 50 comporte des moyens 60 d'évacuation de vapeur d'eau. Par exemple, les parties 52A, 52B comportent des perforations 60 débouchant d'une part sur la deuxième surface interne 54 et d'autre part sur l'extérieur du moule.

Un procédé de fabrication de la pièce structurelle 10 va maintenant être décrit. Tout d'abord, un écarteur 114 est placé entre les parties 32A et 32B du dispositif 30, au contact de la première surface interne 34. L'écarteur 114 est formé d'un matériau léger, tel que du papier ou du carton, et réalisé selon une structure alvéolaire ou en nid d'abeille. L'écarteur 114 a par exemple une épaisseur constante 29 selon l'axe 11.

Les parties 32A et 32B du dispositif 30 sont ensuite pressées l'une contre l'autre selon l'axe 11, de manière à écraser localement l'écarteur 114 au niveau des empreintes 36 et des bords 38, donc à diminuer localement l'épaisseur de l'écarteur 114.

L'écarteur 114 étant en matériau léger, cette étape ne nécessite pas l'application d'une pression élevée entre les parties 32A et 32B. A titre d'exemple, une presse de 20 tonnes est utilisée.

De plus les bords 38 du dispositif 30 découpent l'écarteur 114 sur son pourtour de sorte à définir ses dimensions perpendiculairement à l'axe 11. L'écarteur 14 de la pièce 10 est ainsi obtenu.

En parallèle, le procédé comporte une étape de fourniture d'au moins un voile continu 20 de fibres. Un tel voile est par exemple fabriqué de la manière décrite dans le document WO2013/068355. Le voile 20 est ensuite imprégné par une composition comprenant la résine thermodurcissable 21.

De manière optionnelle, la composition comporte en outre au moins un adjuvant, tel qu'un tensioactif et/ou un épaississant. Comme indiqué ci-dessus, un exemple de compositions utilisables est la gamme de produits Acrodur® de BASF.

L'étape d'imprégnation peut être réalisée de différentes manières connues, telle qu'une vaporisation de la composition sur le voile ou une enduction par contact.

L'étape d'imprégnation est préférentiellement suivie d'un séchage, afin d'éliminer une partie de l'eau contenue dans la composition. Ce séchage permet à la résine d'assurer une certaine cohésion des fibres entre elles, sans réticuler.

Le voile 20 imprégné de résine 21 peut ainsi être conditionné pour stockage, par exemple sous forme de rouleau intercalé avec une feuille intermédiaire comme décrit dans le document WO2013/068355. Le voile 20 ainsi conditionné peut être transporté sur un lieu de moulage ou thermoformage, et éventuellement stocké à nouveau.

En variante, les étapes suivantes de moulage ou thermoformage, décrites ci-après, sont réalisées en sortie de ligne d'imprégnation du voile 20 par la composition comprenant la résine thermodurcissable 21.

Le moulage ou thermoformage de la pièce composite 10 comprend la disposition d'au moins un voile 20 imprégné de résine 21 non réticulée, au contact des surfaces internes 54, respectivement de la première partie 52A et de la seconde partie 52B du dispositif 50. Pour former la pièce 10 de la figure 1, plusieurs voiles 20 imprégnés sont empilés, pour former respectivement le premier 12A et le second 12B mats. Comme indiqué ci-dessus, dans le cas de voiles 20 unidirectionnels, les voiles d'un même mat 12A, 12B sont préférentiellement empilés de manière à croiser les directions des fibres de deux voiles 20 adjacents.

En variante, un ou plusieurs autres types de matériaux sont intercalés avec le ou les voiles 20 pour former les mats 12A, 12B.

Après empilement des couches formant les mats 12A, 12B, les deux parties 52A, 52B du moule 50 sont disposées en vis-à-vis l'une de l'autre, l'écarteur 14 étant placé entre le premier 12A et le second 12B mats, comme représenté à la figure 3. L'empreinte 27 en creux de l'écarteur 14 est notamment placée en vis-à-vis de l'empreinte 56 en relief de la deuxième surface interne 54 de la partie 52A.

De manière préférentielle, les faces 18A, 18B de l'écarteur 14 sont enduites d'une colle 62 avant le placement dudit écarteur entre les mats 12A, 12B. Plus préférentiellement, la colle 62 est une composition à base aqueuse.

En variante les faces 18A et 18B ne sont pas enduites de colle 62. L'adhésion des mats 12A, 12B sur l'écarteur est assurée par la résine présente dans les voiles. Dans ce dernier cas, le pourcentage de résine en poids par rapport au poids d'un mat 12A, 12B est préférentiellement d'au moins 45% en extrait sec.

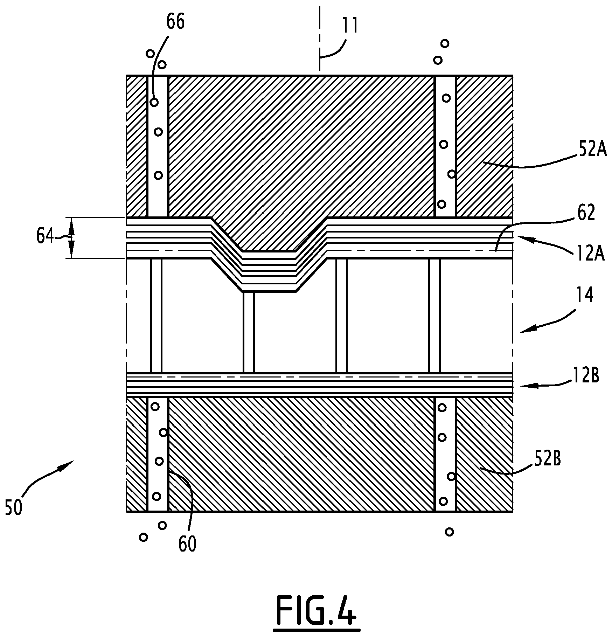

Après l'étape d'empilement, le thermoformage de la pièce composite 10 comporte une étape de compression et de chauffage de l'empilement par le moule 50, comme représenté à la figure 4. Les parties 52A, 52B sont pressées l'une contre l'autre selon l'axe 11.

Les mats 12A, 12B sont formés de voiles 20 denses et de faible épaisseur, ce qui permet aux voiles 20 de se draper sur les faces 18A, 18B de l'écarteur, en se conformant aux creux et reliefs 27 desdites surfaces. La compression peut donc être réalisée à une pression relativement faible, bien que plus élevée que pour l'étape de compression du dispositif 30. Par exemple, une presse d'au moins 60 tonnes est utilisée.

Durant l'étape de thermoformage, une distance 64 mesurée selon l'axe 11, ou entrefer, est maintenue entre l'écarteur 14 et la surface interne 54 du moule 50. Plus précisément, l'entrefer 64 représente la distance minimale entre l'écarteur 14 et la surface interne 54, c'est-à-dire la distance à la fin de l'étape de compression.

Avantageusement, l'entrefer 64 est sensiblement constant sur une même face externe 22A ou 22B de la pièce 10. Par «sensiblement constant », on entend par exemple que l'entrefer 64 est compris entre 95% et 105% d'une valeur moyenne. Ainsi, l'épaisseur 26A ou 26B du mat 12A ou 12B obtenu est sensiblement constante.

Ainsi, la pression appliquée durant le thermoformage est sensiblement homogène sur une même face externe de la pièce 10, ce qui évite un écrasement aléatoire des empreintes 25/27.

Durant l'étape de thermoformage, le chauffage est réalisé à une température et pendant une durée permettant la réticulation de la résine thermodurcissable 21. La température de chauffage est par exemple comprise entre 150°C et 250°C pour une résine acrylique.

En réticulant, la résine 21 lie fermement les fibres de chaque voile 20 entre elles, et les différents voiles 20 entre eux. Préférentiellement, l'étape de compression et de chauffage conduit la résine 21 à occuper la totalité de l'espace entre les fibres des voiles 20 et des éventuels autres matériaux formant les mats 12A, 12B.

Par ailleurs, en réagissant à la chaleur, la colle 62 lie les faces 18A, 18B de l'écarteur aux mats 12A, 12B. En variante, l'écarteur n'est pas enduit de colle et la résine 21 assure la liaison entre l'écarteur et les mats.

Dans le cas d'une colle 62 à base aqueuse, le chauffage conduit à l'évaporation de l'eau contenue dans la colle. La vapeur d'eau 66 ainsi formée traverse les mats 12A, 12B pour s'évacuer par les perforations 60 du moule 50. Dans le cas d'une résine 21 de type acrylique, la vapeur d'eau 66 issue de la colle 62 favorise l'amorçage de la réaction de réticulation de la résine.

De même, la vapeur d'eau dégagée par la résine 21 s'évacue par les perforations 60.

Au niveau des bords 58 de surface interne 54 du moule 50, les parties périphériques 24A, 24B des mats 12A, 12B sont pressées directement au contact l'une de l'autre, enfermant l'écarteur 14 à l'intérieur de la pièce 10. L'écarteur 14 n'est donc pas en contact avec l'extérieur, pour une meilleure étanchéité.

Après refroidissement, la pièce 10 obtenue possède une très bonne définition de la forme des empreintes 27 et bords 23.

Un tel procédé permet d'utiliser un conformateur 30 peu onéreux car ne nécessitant pas de système de chauffage, ni l'application d'une pression élevée. Le coût des différents dispositifs de mise en oeuvre des pièces 10 est donc compétitif.

Par ailleurs l'écarteur peut avoir toutes les épaisseurs souhaitées.

L'utilisation d'une résine 21 acrylique, par exemple de la gamme Acrodur®, permet une réticulation rapide, donc des cycles courts de thermoformage dans le moule 50.

Dans le cas du troisième mode de réalisation préférentiel décrit ci-dessus, où les mats 12A, 12B sont constitués de fibres de renfort associées à des matériaux thermofusibles, le thermoformage dans le moule 50 décrit ci-dessus nécessite une étape préalable de chauffage. Cette étape fait par exemple intervenir un dispositif de type plateau-chaud dans lequel les matériaux fusibles sont portés à leur température de fusion. Les mats 12A, 12B, qui possèdent au sortir des plateaux-chauds la densité requise, sont ensuite déposés dans le moule 50 qui peut être froid ou chauffé à la température de cristallisation du polymère constitutif des matériaux fusibles. La pièce 10 est retirée après 30 à 60 secondes, temps nécessaire à son refroidissement.

## Revendications

1. Procédé de fabrication d'une pièce composite structurelle (10), ledit procédé comprenant les étapes suivantes :
- une étape d'empilement, dans un premier moule chauffant (50), d'un premier mat (12A), d'un écarteur (14) et d'un second mat (12B) ; l'écarteur étant disposé entre le premier et le second mat ; au moins l'un des premier et second mats comportant un voile continu (20) de fibres imprégné par une composition comportant une résine thermodurcissable (21) ; et
- une étape de compression et de chauffage de l'empilement par le premier moule chauffant, le chauffage étant réalisé à une température et pendant une durée permettant une polymérisation ou réticulation de la résine thermodurcissable ;
ledit procédé étant **caractérisé en ce que** :
- il comporte, avant l'étape d'empilement dans le premier moule chauffant, une étape de compression de l'écarteur (114) dans un deuxième moule (30) non chauffant, une première surface interne (34) dudit deuxième moule non chauffant comportant au moins une première empreinte (36) en relief et/ou en creux, ladite première surface interne étant sensiblement orientée dans une direction de compression (11), de sorte à conformer (27) l'écarteur selon ladite empreinte,
- une deuxième surface interne (54) du premier moule chauffant (50) comporte au moins une deuxième empreinte (56) en relief et/ou en creux correspondant à la première empreinte de la première surface interne du deuxième moule non chauffant, ladite deuxième surface interne étant sensiblement orientée dans la direction de compression, de sorte que, durant l'étape de compression et de chauffage par le premier moule, un entrefer (64) entre l'écarteur et ladite deuxième surface interne soit sensiblement constant sur ladite deuxième surface interne.

2. Procédé selon la revendication 1, comprenant, avant l'étape d'empilement dans le premier moule chauffant, une étape de découpage de l'écarteur (114), de sorte à définir des dimensions dudit écarteur perpendiculairement à la direction de compression.

3. Procédé selon la revendication 1 ou la revendication 2, dans lequel, durant l'étape de compression et de chauffage par le premier moule chauffant (50), une première zone (24A) du premier mat est au contact d'une seconde zone (24B) du second mat.

4. Procédé selon l'une des revendications précédentes, comprenant, entre l'étape de compression de l'écarteur dans le deuxième moule non chauffant (30) et l'étape d'empilement dans le premier moule chauffant (50), une étape d'enduction de l'écarteur (14) par une colle (62).

5. Procédé selon la revendication 4, dans lequel la colle est à base aqueuse.

6. Procédé selon l'une des revendications précédentes, dans lequel :
- la résine thermodurcissable (21) génère de l'eau au cours de sa polymérisation ou réticulation ; et
- le premier moule chauffant comporte des moyens (60) d'évacuation de vapeur d'eau (66) formée lors de l'étape de compression et de chauffage.

7. Procédé selon l'une des revendications précédentes, dans lequel le voile continu de fibres (20) comprend une pluralité de fibres parallèles liées entre elles par la composition comportant une résine thermodurcissable.

8. Procédé selon l'une des revendications précédentes, dans lequel l'étape d'empilement du premier (12A) et/ou du second (12B) mats comprend l'empilement dans le premier moule chauffant (50) d'une pluralité de voiles continus (20).

9. Pièce composite structurelle (10) issue d'un procédé selon l'une des revendications 7 à 8, ladite pièce comportant un premier mat (12A), un écarteur (14) et un second mat (12B), l'écarteur (14) étant disposé entre le premier mat (12A) et le second mat (12B), au moins l'un des premier et second mats comportant un voile continu (20) de fibres imprégné par une composition comportant une résine thermodurcissable (21), ledit voile continu comprenant une pluralité de fibres parallèles liées entre elles par ladite composition ;
une surface externe (22A) du premier mat et/ou une surface externe (22B) du second mat comportant au moins une empreinte (25) en relief et/ou en creux, à proximité d'un bord (23) de ladite pièce.

10. Pièce composite structurelle selon la revendication 9, dans laquelle, à proximité d'un bord de ladite pièce, le premier et le second mats sont au contact (24A, 24B) l'un de l'autre.

## Patentansprüche

1. Verfahren zur Herstellung eines Verbund-Strukturbauteils (10), wobei das Verfahren die folgenden Schritte aufweist:
- einen Schritt des Stapelns, in einer ersten Heizform (50), einer ersten Matte (12A), eines Abstandhalters (14) und einer zweiten Matte (12B), wobei der Abstandhalter zwischen der ersten und der zweiten Matte angeordnet ist, wobei wenigstens eine von der ersten und der zweiten Matte eine kontinuierliche Lage (20) aus Fasern aufweist, die imprägniert ist mit einer Zusammensetzung, die ein wärmeaushärtbares Harz (21) aufweist, und
- einen Schritt des Komprimierens und des Erwärmens des Stapels mittels der ersten Heizform, wobei das Erwärmen erfolgt bei einer Temperatur und während einer Dauer, erlaubend eine Polymerisation oder Vernetzung des wärmeaushärtbaren Harzes,
wobei das Verfahren **dadurch gekennzeichnet ist, dass**:
- es aufweist, vor dem Schritt des Stapelns in der ersten Heizform, einen Schritt des Komprimierens des Abstandhalters (114) in einer zweiten, nicht-heizenden Form (30), wobei eine erste Innenfläche (34) der zweiten, nicht-heizenden Form wenigstens eine erhabene und/oder vertiefte Prägekontur (36) aufweist, wobei die erste Innenfläche im Wesentlichen in eine Komprimierrichtung (11) ausgerichtet ist, um den Abstandhalter entlang der Prägekontur anzupassen (27),
- wobei eine zweite Innenfläche (54) der ersten Heizform (50) wenigstens eine zweite erhabene und/oder vertiefte Prägekontur (56) aufweist, die zu der ersten Prägekontur der ersten Innenfläche der zweiten, nicht-heizenden Form korrespondiert, wobei die zweite Innenfläche im Wesentlichen in die Komprimierrichtung ausgerichtet ist, sodass, während des Schritts des Komprimierens und des Erwärmens mittels der ersten Heizform, ein Spalt (64) zwischen dem Abstandhalter und der zweiten Innenfläche im Wesentlichen konstant ist an der zweiten Innenfläche.

2. Verfahren gemäß Anspruch 1, aufweisend, vor dem Schritt des Stapelns in der ersten Heizform, einen Schritt des Schneidens des Abstandhalters (114), um Abmessungen des Abstandhalters senkrecht zur der Komprimierrichtung zu definieren.

3. Verfahren gemäß Anspruch 1 oder Anspruch 2, wobei, während des Schritts des Komprimierens und des Heizens mittels der ersten Heizform (50), ein erster Bereich (24A) der ersten Matte im Kontakt ist mit einem zweiten Bereich (24B) der zweiten Matte.

4. Verfahren gemäß einem der vorhergehenden Ansprüche, aufweisend, zwischen dem Schritt des Komprimierens des Abstandhalters in der zweiten, nicht-heizenden Form (30) und dem Schritt des Stapelns in der ersten Heizform (50), einen Schritt des Beschichtens (14) des Abstandhalters (14) mit einem Klebstoff (62).

5. Verfahren gemäß Anspruch 4, wobei der Klebstoff auf Wasserbasis ist.

6. Verfahren gemäß einem der vorhergehenden Ansprüche, wobei:
- das wärmeaushärtbare Harz (21) im Laufe seiner Polymerisation oder Vernetzung Wasser generiert, und
- die erste Heizform aufweist Mittel (60) zum Abziehen von Wasserdampf (66), der während des Schritts des Komprimierens und des Erwärmens gebildet wird.

7. Verfahren gemäß einem der vorhergehenden Ansprüche, wobei die kontinuierliche Lage aus Fasern (20) aufweist eine Mehrzahl von parallelen Fasern, die untereinander verbunden sind mittels der Zusammensetzung, die ein wärmeaushärtbares Harz aufweist.

8. Verfahren gemäß einem der vorhergehenden Ansprüche, wobei der Schritt des Stapelns der ersten (12A) und/oder der zweiten Matte (12B) aufweist das Stapeln einer Mehrzahl von kontinuierlichen Lagen (20) in der ersten Heizform (50).

9. Verbund-Strukturbauteil (10) erlangt durch ein Verfahren gemäß einem der Ansprüche 7 bis 8, wobei das Bauteil aufweist eine erste Matte (12A), einen Abstandhalter (14) und eine zweite Matte (12B), wobei der Abstandhalter (14) zwischen der ersten Matte (12A) und der zweiten Matte (12B) angeordnet ist, wobei wenigstens eine von der ersten und der zweiten Matte eine kontinuierliche Lage (20) aus Fasern aufweist, die mit einer Zusammensetzung imprägniert sind, die ein wärmeaushärtbares Harz (21) aufweist, wobei die kontinuierliche Lage aufweist eine Mehrzahl von parallelen Fasern, die untereinander verbunden sind durch diese Zusammensatzung,
wobei eine Außenfläche (22A) der ersten Matte und/oder eine Außenfläche (22B) der zweiten Matte in der Nähe eines Rands (23) des Bauteils wenigstens eine erhabene und/oder vertiefte Prägekontur (25) aufweist.

10. Verbund-Strukturbauteil gemäß Anspruch 9, wobei, in der Nähe eines Rands des Bauteils, die erste und die zweite Matte miteinander im Kontakt (24A, 24B) sind.

## Claims

1. A method for manufacturing a structural composite component (10), said method comprising the following steps:
- stacking, in a first heating mold (50), a first mat (12A), a spacer (14) and a second mat (12B); the spacer being positioned between the first and second mats; at least one of the first and second mats including a continuous web (20) of fibers impregnated with a composition including a thermosetting resin (21); and
- compression and heating of the stack by the first heating mold, the heating being done at a temperature and for a duration allowing polymerization or cross-linking of the thermosetting resin;
said method being **characterized in that**:
it includes, before the stacking step in the first heating mold, a step of compressing the spacer (114) in a non-heated second mold (30), a first inner surface (34) of said non-heating second mold including at least one first raised and/or hollow cavity die (36), said first inner surface being substantially oriented in a compression direction (11), so as to configure (27) the spacer according to said cavity die,
- a second inner surface (54) of the first heating mold (50) includes at least one second raised and/or hollow cavity die (56) corresponding to the first cavity die of the first inner surface of the non-heating second mold, said second inner surface being substantially oriented in the compression direction, such that, during the step for compression and heating by the first mold, an air gap (64) between the spacer and said second inner surface is substantially constant over said second inner surface.

2. The method according to claim 1, comprising, before the step of stacking in the first heating mold, a step for cutting the spacer (114), so as to define dimensions of said spacer perpendicular to the compression direction.

3. The method according to claim 1 or claim 2, wherein, during the step of compression and heating by the first heating mold (50), a first zone (24A) of the first mat is in contact with a second zone (24B) of the second mat.

4. The method according to one of the preceding claims, comprising, between the compression step of the spacer in the non-heating second mold (30) and the stacking step in the first heating mold (50), a step for coating the spacer (14) with a glue (62).

5. The method according to claim 4, wherein the glue has an aqueous base.

6. The method according to any one of the preceding claims, wherein:
- the thermosetting resin (21) generates water during its polymerization or cross-linking; and
- the first heating mold includes means (60) for discharging steam (66) formed during the compression and heating step.

7. The method according to one of the preceding claims, wherein the continuous web of fibers (20) comprises a plurality of parallel fibers connected to one another by the composition including a thermosetting resin.

8. The method according to one of the preceding claims, wherein the step of stacking the first (12A) and/or second (12B) mats comprises stacking a plurality of continuous webs (20) in the first heating mold (50).

9. A structural composite component (10) derived from a method according to one of claims 7 or 8, said component including a first mat (12A), a spacer (14) and a second mat (12B), the spacer (14) being positioned between the first mat (12A) and the second mat (12B), at least one of the first and second mats including a continuous web (20) of fibers impregnated with a composition including a thermosetting resin (21), said web comprising a plurality of parallel fibers connected to one another by said composition ;
an outer surface (22A) of the first mat and/or an outer surface (22B) of the second mat including at least one raised and/or hollow cavity die (25), near an edge (23) of said component.

10. The composite component according to claim 9, wherein, near an edge of said component, the first and second mats are in contact (24A, 24B) with one another.
